# EUROPEAN PATENT APPLICATION

(11) **EP 3 403 857 A1**
(43) Date of publication of application: **21.11.2018**
(21) Application number: 18172140.8
(22) Date of filing: 14.05.2018
(51) Int. Cl.: B60G 3/14, B60G 7/00, B60K 7/00, B62K 5/10

(54) **SUSPENSION DEVICE FOR NON-STEERED DRIVING WHEEL INCORPORATING IN-WHEEL MOTOR**

(30) Priority: 16.05.2017 JP 2017097418
(71) Applicant: TOYOTA JIDOSHA KABUSHIKI KAISHA, Toyota-shi, Aichi 471-8571 (JP)
(72) Inventor: KATO, Yoshihisa, Aichi, 471-8571 (JP); ADACHI, Satoshi, Aichi, 471-8571 (JP)
(74) Representative: J A Kemp

(57) **Abstract**

A suspension device (10) for a non-steered driving wheel (12L, 12R) in which an in-wheel motor (17L, 17R) for driving the driving wheel is incorporated in a wheel carrier (16L, 16R) and which includes suspension arm (22L, 22R) pivotally supported on a vehicle body at one end and connected at the other end to the wheel carrier via at least two elastic bushing devices (56f, 56r, 56u). A principal elastic axis (68R) which is determined by the at least two elastic bushing devices and extends vertically passes through a grounding area of the driving wheel.

## Description

### BACKGROUND OF THE INVENTION

### 1. Field of the Invention

The present invention relates to a suspension device, and more particularly to a suspension device for a non-steered driving wheel incorporating an in-wheel motor.

### 2. Description of the Related Art

In a vehicle such as an electric vehicle having wheels that each incorporate an in-wheel motor, each in-wheel motor is housed in a housing and cooperates with the housing to form an in-wheel motor unit. A main part of the in-wheel motor unit is disposed radially inside a wheel member of the wheel together with a support member for rotatably supporting the wheel. A suspension device that suspends the wheel incorporating the in-wheel motor from a vehicle body includes a suspension arm that is pivotally supported on the vehicle body at one end so that the wheel can move up and down with respect to the vehicle body like a suspension device for a wheel not incorporating an in-wheel motor and is connected to the in-wheel motor unit at the other end.

In a wheel incorporating an in-wheel motor, in addition to a vibration of the wheel caused by a road surface input, vibration caused by the rotation of the in-wheel motor is generated. Therefore, an elastic vibration isolator device having a vibration shielding function, such as a rubber damper or a rubber bushing device, is interposed between one end of a suspension arm and an in-wheel motor unit so that the vibration of the wheel is transmitted to a vehicle body as little as possible.

For example, in Japanese Patent Application Laid-open No. 2005-126037, a suspension device is described in which a central portion of an arm member extending in a direction crossing a suspension arm is supported by one end of a suspension arm, and rubber mounts are interposed between both ends of the arm member. A suspension device in which an outer end of a suspension arm is connected to an in-wheel motor unit via a rubber bushing device is also well known.

In a suspension device in which an elastic vibration isolator member is interposed between an outer end of a suspension arm and an in-wheel motor unit as in the suspension device described in the above-mentioned Japanese Laid-open publication, a principal elastic axis is determined by the elastic vibration isolator member. During acceleration and deceleration of a vehicle and at a time of disturbance being input from a road surface, each wheel rotates about the principal elastic axis due to a longitudinal force acting on the wheel, and when the vehicle turns, the wheel rotates about the principal elastic axis. Therefore, even if the wheels are non-steering driven wheels, a change in steered angle of the wheels occurs, so that the running stability of a vehicle decreases depending on a position of the principal elastic axis. It is to be noted that the "principal elastic axis" determined by the elastic vibration isolator member means an imaginary line passing through positions where a direction of action of a load applied to a wheel and a direction of displacement of the wheel due to an elastic deformation of the elastic vibration isolator member coincide with each other and does not cause a steering of the wheel.

However, in a conventional suspension device for a wheel incorporating an in-wheel motor such as the suspension device described in the above-mentioned Japanese Patent Application Laid-open publication, a position of an principal elastic axis determined by an elastic vibration isolator member and a change in steered angle of the wheel about the principal elastic axis are not taken into consideration. In particular, since a change in steered angle about an principal elastic axis in non-steered wheels cannot be prevented by steering or holding by a driver, the problem of steered angle change is significant in non-steered wheels, and further significant in non-steered driving wheels where a braking/driving force of the wheels changes. Therefore, the problem of the steered angle change of wheels about principal elastic axes has much room for improvement in non-steered driving wheels incorporating in-wheel motors.

### SUMMARY

The present invention provides a suspension device for non-steered driving wheel incorporating an in-wheel motor that is improved so that a steered angle change that occurs when a longitudinal force, a disturbance from a road surface and/or a lateral force act on the wheel is smaller than before.

According to the present invention, a suspension device for a non-steered driving wheel is provided which is rotationally driven by an in-wheel motor incorporated in a wheel carrier, the suspension device comprising at least one suspension arm pivotally supported at one end on a vehicle body of a vehicle and connected to the wheel carrier on the other end side.

The at least one suspension arm is connected to the wheel carrier via at least two elastic bushing devices, and a principal elastic axis which is determined by the at least two elastic bushing devices and extends vertically passes through a grounding area of the driving wheel.

A longitudinal force acting at the time of acceleration and deceleration of the vehicle and at the time of disturbance being input from a road surface and a lateral force acting at the time of turning of the vehicle act on the non-steered driving wheel in a grounding area. According to the above configuration, the principal elastic axis, which is determined by at least two elastic bushing devices and extends vertically, passes through the grounding area of the non-steered driving wheel. Therefore, a distance between a position where a longitudinal force, a disturbance from a road surface and a lateral force act and the principal elastic axis is smaller than that in the configuration in which the principal elastic axis does not pass through a grounding area of the non-steered driving wheel. Consequently, a torque about the principal elastic axis generated when a longitudinal force, a disturbance from a road surface and a lateral force act on the non-steered driving wheel is small, and a change in steered angle of the driving wheel is also small. Accordingly, it is possible to improve a running stability of the vehicle at the time of acceleration and deceleration of the vehicle, a disturbance being input from a road surface, and turning, as compared with the case where the principal elastic axis does not pass through a grounding area of the driving wheel.

In one aspect of the present invention, the non-steered driving wheel has an axle rotatably supported by the wheel carrier via a bearing, and the principal elastic axis passes through an area of the axle as seen in a lateral direction of the vehicle.

According to the above aspect, the principal elastic axis passes through an area of the axle of the non-steered driving wheel as seen in the lateral direction of the vehicle. Therefore, as compared to a configuration in which the principal elastic axis does not pass through an area of the axle of the non-steered driving wheel as seen in the lateral direction of the vehicle, a change in steered angle of the driving wheel occurring when a lateral force acts on the driving wheel can be reduced. Accordingly, it is possible to further improve a running stability of the vehicle at the time of turning of the vehicle.

In another aspect of the present invention, the at least one suspension arm is one suspension arm extending in a longitudinal direction of the vehicle, and the one suspension arm is connected to the wheel carrier via elastic bush devices at a plurality of positions including two positions spaced apart in the longitudinal direction of the vehicle and one position vertically spaced from the two positions.

According to the above aspect, in a vehicle in which the suspension device is a leading arm type or a trailing arm type suspension device for a non-steered driving wheel, a change in steered angle of the driving wheel caused when a longitudinal force and/or a lateral force act on the driving wheel can be reduced.

In another aspect of the present invention, the at least one suspension arm includes a plurality of suspension arms extending in a lateral direction of the vehicle, and the plurality of suspension arms are connected to the wheel carrier via the elastic bushing devices.

According to the above aspect, the suspension device has a plurality of suspension arms extending in the lateral direction of the vehicle, and the plurality of suspension arms are connected to the wheel carrier via elastic bushing devices. Therefore, in a vehicle in which the suspension device is a double wishbone type suspension device for a non-steered driving wheel, a change in steered angle of the driving wheel caused when a longitudinal force and/or a lateral force act on the driving wheel can be reduced.

In another aspect of the present invention, the suspension device includes a MacPherson strut integrally connected to the wheel carrier at the lower end, and one of the at least two elastic bush devices that determines the principal elastic axis is interposed between an upper end of the MacPherson strut and the vehicle body.

According to the above aspect, in a vehicle in which the suspension device is a MacPherson strut type suspension device for a non-steered driving wheel, it is possible to reduce a change in steered angle of the driving wheel caused when a longitudinal force, a disturbance being input from a road surface and a lateral force act on the driving wheel. As is well known, the MacPherson strut type suspension device may be considered to be equivalent to a double wishbone type suspension device having an infinity length of an upper arm. Therefore, the elastic bush device may be considered to be interposed between an upper end of the MacPherson strut and the vehicle body is disposed between an outer end of an upper arm having an infinite length and the upper end of the MacPherson strut integrally connected to the wheel carrier.

In another aspect of the present invention, the vehicle includes a pair of the non-steered driving wheels spaced laterally and a vehicle tilting device configured to tilt the vehicle to a turning inner side when the vehicle turns, and the vehicle tilting device includes a swing member that swings about a swing axis extending in the front-rear direction, an actuator that swings the swing member about the swing axis, and a pair of connecting rods pivotally connected to the swing member at upper end pivot points and pivotally connected to the corresponding wheel carriers at lower end pivot points on both lateral sides with respect to the swing axis.

According to the above aspect, the non-steered driving wheels suspended from the vehicle body by the suspension device are non-steered driving wheels of an automatic tilting vehicle which is tilted to a turning inner side when turning by a vehicle tilting device. Therefore, it is possible to reduce a change in steered angle of the non-steered driving wheels at the time of acceleration/deceleration of the automatic tilting vehicle, a disturbance being input from a road surface and a turning, and to reduce a change in steered angle of the driving wheels at the time of acceleration/deceleration of the automatic tilting vehicle, to thereby improve a running stability of the vehicle.

Other objects, other features and attendant advantages of the present invention will be readily understood from the description of the embodiments of the present invention described with reference to the following drawings. It is to be noted that in the present application, "front-rear direction" or "longitudinal direction" and "lateral direction" are the front-rear direction of the vehicle and the lateral direction of the vehicle, respectively, and "front" and "rear" are front and rear in the front-rear direction of the vehicle, respectively.

### BRIEF DESCRIPTION OF THE DRAWINGS

FIG. 1 is a rear view showing an automatic tilting vehicle to which a first embodiment of a suspension device according to the present invention is applied as seen from the rear.
FIG. 2 is a side view showing the automatic tilting vehicle shown in FIG. 1 as seen from the left side of the vehicle.
FIG. 3 is a rear view showing the suspension device of the right front wheel according to the first embodiment.
FIG. 4 is a side view of a main part of a right front wheel suspension device according to a second embodiment of the present invention as seen from the inside of the vehicle.
FIG. 5 is a rear view of a main part of a right front wheel suspension device according to the second embodiment of the present invention as viewed from the rear of the vehicle.
FIG. 6 is a side view of a main part of a right front wheel suspension device according to a third embodiment of the present invention as seen from the inside of the vehicle.
FIG. 7 is a rear view of a main part of a right front wheel suspension device according to the third embodiment of the present invention as viewed from the rear of the vehicle.
FIG. 8 is a side view of a main part of a right front wheel suspension device according to a fourth embodiment of the present invention as seen from the inside of the vehicle.
FIG. 9 is a rear view of a main part of a right front wheel suspension device according to the fourth embodiment of the present invention as viewed from the rear of the vehicle.

### DETAILED DESCRIPTION

Embodiments of the present invention will now be described in detail with reference to the accompanying drawings.

### [First Embodiment]

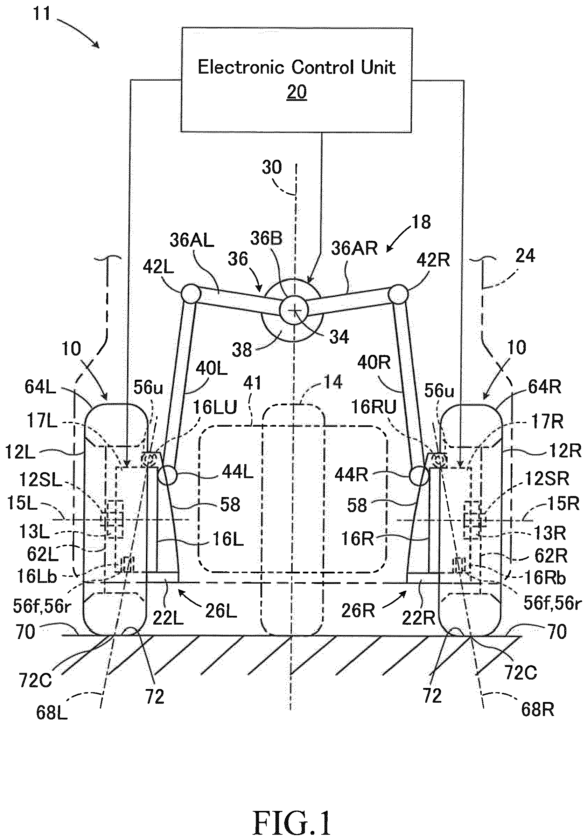

In FIGS. 1 to 3, a suspension device 10 according to a first embodiment of the present invention is applied to an automatic tilting vehicle 11, and is configured as a leading arm type suspension device. The vehicle 11 is a three-wheeled vehicle including a pair of front wheels 12L and 12R which are non-steered driving wheels, and a single rear wheel 14 which is a steered driven wheel. The front wheels 12L and 12R are spaced apart from each other in the lateral direction. Axles 12SL and 12SR of the front wheels 12L and 12R are rotatably supported by corresponding wheel carriers 16L and 16R via bearings 13L and 13R about rotation axes 15L and 15R, respectively. The automatic tilting vehicle 11 further includes a vehicle tilting device 18 and an electronic control unit 20. It should be noted that the rear wheel 14 may be a steered driving wheel or two wheels having a smaller tread than the front wheels.

The front wheels 12L and 12R are suspended from a vehicle body 24 by the right and left suspension devices 10, respectively. The camber of the front wheels 12L and 12R is a neutral camber, but may be a negative camber or a positive camber. The rear wheel 14 is positioned rearwardly with respect to the front wheels. Although not shown in the figures, the rear wheel 14 is supported by a rear wheel suspension so as to be vertically displaceable with respect to the vehicle body 24 and to restrict lateral displacement and inclination with respect to the vehicle body 24. Further, the rear wheel 14 is steered in a steer-by-wire manner by a steering device being controlled by the electronic control unit 20 in accordance with an operation amount of a steering wheel by a driver.

The wheel carriers 16L and 16R incorporate in-wheel motors 17L and 17R as driving devices, respectively, and each function as a housing of the corresponding in-wheel motor. Rotational direction and an output of the in-wheel motors are controlled by the electronic control unit 20 in accordance with operations of a shift lever and an accelerator pedal (neither shown) by the driver. Braking forces of the front wheels 12L and 12R and the rear wheel 14 are controlled by the electronic control unit 20 controlling a braking device which is not shown in the figures but operates in accordance with an operation of a brake pedal by the driver.

The left and right suspension devices 10 include suspension arms 22L and 22R, respectively. The wheel carriers 16L and 16R are supported by the corresponding suspension arms 22L and 22R so as to be vertically displaceable with respect to the vehicle body 24 and to restrict the lateral displacement and inclination with respect to the vehicle body 24. The illustrated suspension arms 22L and 22R are leading arms that are integrally connected to the wheel carriers 16L and 16R at the front ends by connecting structures 26L and 26R, respectively, and are connected to the vehicle body 24 by joints 28L and 28R at the rear ends.

The joints 28L and 28R may be joints, for example, rubber bushing devices having axes extending substantially in the lateral direction. As long as the above-described requirements regarding the wheel carriers 16L and 16R are satisfied, the suspension arms 22L and 22R may be trailing arms or other arms such as combinations of an upper arm and a lower arm as in the later-described embodiment. The configuration of the connecting structures 26L and 26R will be described later in detail.

The vehicle tilting device 18 includes a swing member 36 that swings about a swing axis 34 extending in the front-rear direction and slightly inclined rearward, an actuator 38 that swings the tilting member 36 about the swing axis 34, and a pair of connecting rods 40L and 40R. In FIG. 1, for convenience of explanation, the electronic control unit 20 is illustrated above the vehicle tilting device 18, but it may be housed in an internal structure 41 provided between the front wheels 12L and 12R.

The connecting rods 40L and 40R extend substantially in the vertical direction on both sides transversely to the swing axis 34 and are pivotally connected at the upper ends to the corresponding outer ends of the swing member 36 by joints 42L and 42R. The joints 42L and 42R are preferably joints including a pivot pin with a rubber bush having an axis substantially extending in the longitudinal direction of the vehicle, but may be joints such as ball joints. The illustrated connecting rods 40L and 40R are straight, but may be at least partially curved.

Further, the connecting rods 40L and 40R are pivotally connected at the lower ends to the wheel carriers 16L and 16R by joints 44L and 44R, respectively such as ball joints. A lateral distance between the centers of the joints 44L and 44R is greater than a lateral distance between the centers of the joints 42L and 42R. Note that when a pair of vertical arms extending in the vertical direction are provided and lower ends of the vertical arms are fixed to the corresponding suspension arms 22L and 22R, the connecting rods 40L and 40R may be pivotally connected to upper ends of the corresponding vertical arms. In that case, the lower ends of the connecting rods 40L, 40R are connected to the wheel carriers 16L, 16R via the corresponding vertical arms and the suspension arms 22L, 22R.

The swing member 36 has a boss portion 36B rotatable about the swing axis 34 and arm portions 36AL and 36AR integrally formed with the boss portion 36B and extending in opposite directions from the boss portion 36B, and functions as a swing arm member capable of swinging about the swing axis 34. The effective lengths of the arm portions 36AL and 36AR, that is, a distance between the axis 34 and the center of the joint 42L and a distance between the axis 34 and the center of the joint 42R are the same.

The tilt actuator 38 may be a rotary electric actuator such as a harmonic drive (registered trade mark) including an electric motor such as a DC brushless motor and a reduction gear, both not shown in the figures. An output rotary shaft of the actuator 38 protrudes rearward and the boss portion 36B is fixedly attached to the tip of the output rotary shaft so that the rotary motion of the electric motor is transmitted as a swing motion to the swing member 36. The actuator 38 may be a reciprocating type or a swing type actuator. In the former case, a reciprocating motion of the actuator is converted into a swing motion by a motion converting mechanism and is transmitted to the swing member 36.

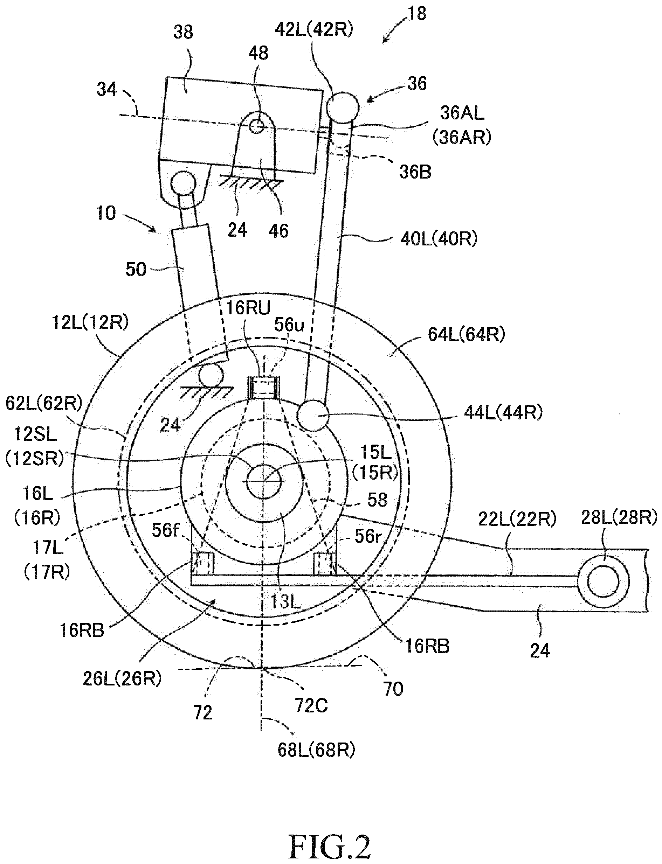

As shown in FIG. 2, the actuator 38 is arranged between a pair of brackets 46 laterally spaced and fixed to the vehicle body 24. The actuator 38 has a pair of pivot shafts 48 protruding laterally away from each other and is pivotally supported about the pivot shafts 48 as the shafts 48 are rotatably supported by the brackets 46. A suspension spring 50 and a shock absorber (not shown) are interposed between a front end portion of the actuator 38 and the vehicle body 24 below the front end portion. Therefore, the actuator 38 is connected to the vehicle body via the suspension spring 50 and the shock absorber, not shown, so that the actuator 38 can be displaced in the vertical direction with respect to the vehicle body 24 and the displacement and inclination in the lateral direction with respect to the vehicle body are restricted but the actuator can vertically displaceable with respect to the vehicle body 24 at the front end and rear end portions. It should be noted that the suspension spring 50 may be an elastic member such as a compression coil spring.

The front wheels 12L, 12R and the vehicle tilting device 18 are supported from the vehicle body 24 by the suspension device 10 so that they are capable of relatively displacing in the vertical direction with respect to the vehicle body 24, but lateral displacement and inclination with respect to the vehicle body are restricted. Relative vertical vibration between the front wheels 12L and 12R and the vehicle body 24 generated when the vehicle travels is damped by the shock absorber 50 and the impact of the front wheels 12L and 12R received from a road surface and transmitted to the vehicle body 24 is attenuated by a suspension spring, not shown in the figures.

Although not shown in the figures, when the swing member 36 swings about the swing axis 34, the connecting rods 40L and 40R move up and down in opposite directions, whereby the front wheels 12L and 12R move up and down in opposite directions with respect to the vehicle body 24, which tilts the vehicle 11 in the lateral direction. In particular, the swing member 36 swings so that the connecting rod on the turning inner side rises and the connecting rod on the turning outer side moves downward, whereby the vehicle 11 is inclined toward the inner side of the turning.

A tilt angle of the vehicle 11 is controlled by the actuator 38 of the vehicle tilting device 18 being controlled by the electronic control unit 20. The electronic control unit 20 calculates an estimated lateral acceleration of the vehicle based on a steering angle equal to a rotation angle of a steering wheel (not shown) and a vehicle speed, and calculates a target tilt angle of the vehicle 11 based on the estimated lateral acceleration. Further, the electronic control unit 20 calculates a target rotation angle of the electric motor of the actuator 38 based on the target tilt angle, and controls the electric motor so that a rotation angle of the electric motor becomes the target rotation angle. Further, the electronic control unit 20 calculates a target steered angle of the rear wheel 14 based on a steering angle and a vehicle speed, and steers the rear wheels 14 in a steer-by-wire manner by controlling a steering actuator, not shown in the figures, so that the steered angle of the rear wheel becomes the target steered angle.

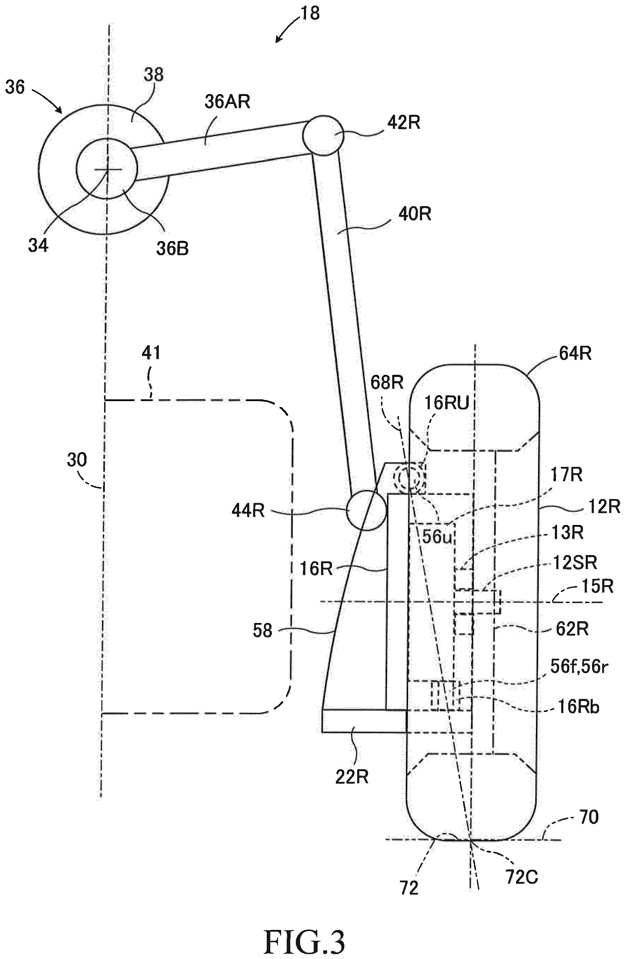

In particular, in the first embodiment, as shown in FIGS. 2 and 3, the coupling structure 26R includes a pair of rubber bushing devices 56f and 56r spaced apart in the front-rear direction and a rubber bushing device 56u spaced above the rubber bushing devices 56f and 56r. Although not shown in the figures, the rubber bushing devices 56f, 56r, and 56u include metal inner and outer cylinders which are concentric with each other, and an elastic bushing such as a rubber bush filled and bonded between the inner and outer cylinders.

The wheel carrier 16R has a pair of boss portions 16RB at positions spaced apart from each other in the front-rear direction of the lower edge portion thereof. Although not shown in detail in the figures, the rubber bushing devices 56f and 56r are disposed in the boss portions 16RB, and the outer cylinders are press-fitted into the boss portions. The front end portion of the suspension arm 22R has a staple-shaped cross section extending over and under the boss portions 16RB. Both ends of each of the rubber bushing devices 56f and 56r are fixed to a portion having the staple-shaped cross section by a bolt inserted in the inner cylinder and a nut screwed thereto.

The wheel carrier 16R has one boss portion 16RU spaced above the pair of boss portions 16RB at a position between the pair of boss portions. The rubber bushing device 56u is disposed in the boss portion 16RU, and the outer cylinder is press-fitted into the boss portion. A lower edge portion of a side wall member 58 is fixed to the front end portion of the suspension arm 22R by means such as welding. The side wall member 58 has a cross-sectional shape of a staple-shape laterally outwardly opened and is substantially trapezoidal as viewed in the lateral direction. The upper end portion of the side wall member 58 surrounds the boss portion 16RU excluding the lateral outside, and both ends of the rubber bush device 56u are fixed to the upper end portion of the side wall member 58 by a bolt inserted in the inner cylinder and a nut screwed thereto. As understood from the above description, the rubber bushing device 56u, the side wall member 58 and the like also constitute a part of the connecting structure 26R.

Although not shown in the figures, the coupling structure 26L also has the same configuration as the coupling structure 26R except that the relationship in the lateral direction with respect to the center plane 30 of the vehicle 11 is reversed. Therefore, the suspension arms 22L, 22R and the coupling structures 26L, 26R are mirror images of each other as seen in the vertical direction and the front-rear direction of the vehicle 11.

As shown in FIGS. 1 and 3, the front wheels 12L and 12R include metallic wheel members 62L and 62R, and tires 64L and 64R, respectively mainly made from rubber and mounted on rim portions of the wheel members. The wheel members 62L and 62R are integrally connected to axles 12SL and 12SR rotatably supported by the wheel carriers 16L and 16R, respectively. As shown in FIGS. 1 and 2, the wheel carriers 16L, 16R and the coupling structures 26L, 26R are spaced inside from radially inner surfaces of the rim portions of the corresponding wheel members 62L, 62R so that they do not interfere with the rim portions.

As shown in FIGS. 2 and 3, the rubber bushing devices 56f, 56r and 56u of the front wheel 12R cooperate with each other to determine an principal elastic axis 68R extending substantially in the vertical direction. The principal elastic axis 68R extends vertically through the rotation axis 15R of the front wheel 12R as viewed in the lateral direction, extends obliquely so that an upper side portion is located inside the vehicle as viewed in the front-rear direction and passes through the center 72C of a grounding area 72 where the tire 64R contacts a road surface 70. Although not shown in the figures, the rubber bushing devices 56f, 56r, and 56u of the front wheel 12L also determine an principal elastic axis 68L passing through a center 72C of a grounding area 72 of the tire 64L, similarly to the principal elastic axis 68R, except that the relationship in the lateral direction with respect to the center plane 30 of the vehicle 11 is opposite.

### [Second Embodiment]

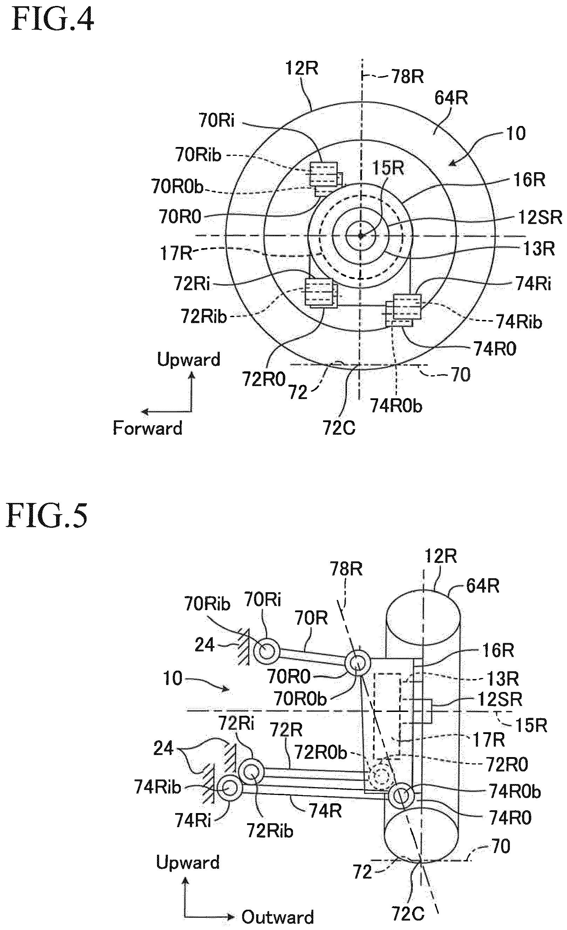

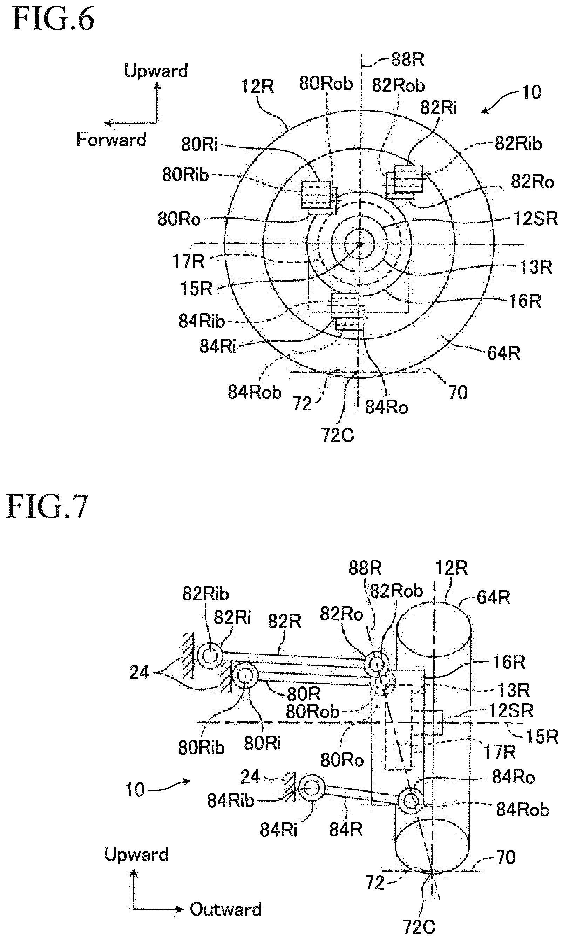

FIGS. 4 and 5 are side and rear views, respectively of a main part of a right front wheel suspension device according to the second embodiment of the present invention. In FIGS. 4 and 5, the same members as those shown in FIGS. 2 and 3 are denoted by the same reference numerals as those denoted in FIGS. 2 and 3, respectively. This also applies to FIGS. 6 to 9 showing the third and fourth embodiments described later..

In the second embodiment, the suspension device 10 is configured as a double wishbone type suspension device including one upper arm 70R and two lower arms 72R and 74R. The upper arm 70R and the lower arms 72R and 74R substantially extend in the lateral direction. The upper arm 70R is pivotally supported on the vehicle body 24 at the inner end via a joint 70Ri and pivotally attached to the wheel carrier 16R at the outer end via a joint 70Ro. The lower arms 72R and 74R are pivotally supported on the vehicle body 24 at the inner ends thereof via joints 72Ri and 74Ri, respectively, and pivotally connected to the wheel carrier 16R via joints 72Ro and 74Ro at the outer ends.

As shown in FIG. 4, the joint 70Ro is positioned above and in front of the rotation axis 15R of the front wheel 12R. The joint 72Ro is located below and in front of the rotation axis 15R, and the joint 74Ro is positioned below the joint 72Ro at the rear of the rotation axis 15R. As shown in FIG. 5, the joints 72Ro and 74Ro are located on the outside of the vehicle than the joint 70Ro.

The joints 70Ri, 72Ri and 74Ri include rubber bushing devices 70Rib, 72Rib and 74Rib, respectively. The rubber bushing devices 70Rib, 72Rib and 74Rib have axes extending in the front-rear direction, and both ends of the rubber bushing devices 70Rib, 72Rib and 74Rib are supported by brackets (not shown) provided on the vehicle body 24. Likewise, the joints 70Ro, 72Ro and 74Ro include rubber bushing devices 70Rob, 72Rob and 74Rob, respectively. The rubber bushing devices 70Rob, 72Rob, and 74Rob have axes extending in the front-rear direction, and both ends of the rubber bushing devices 70Rob, 72Rob and 74Rob are supported by brackets (not shown) provided on the wheel carrier 16R.

The rubber bushing devices 70Rob, 72Rob and 74Rob cooperate with each other to determine a principal elastic axis 78R extending substantially in the vertical direction. The principal elastic axis 78R extends i vertically through the rotation axis 15R of the front wheel 12R as viewed in the lateral direction, extends obliquely so that an upper portion is located inside the vehicle with respect to the wheel 12R as viewed in the front-rear direction, and passes through a center 72C of a grounding area 72 where the tire 64R is in contact with a road surface 70.

Although not shown in the figures, the suspension device 10 of the left front wheel 12L is also configured similarly to the suspension device 10 of the right front wheel 12R, except that the relationship in the lateral direction with respect to the center plane 30 of the vehicle 11 is reversed. The suspension device 10 is applied to the automatic tilting vehicle 11 as in the first embodiment. This also applies to the third and fourth embodiments described later.

### [Third Embodiment]

FIGS. 6 and 7 are side and rear views, respectively of a main part of a right front wheel suspension device according to the third embodiment of the present invention.

In the third embodiment, the suspension device 10 is configured as a double wishbone type suspension device including two upper arms 80R and 82R and one lower arm 84R. The upper arms 80R and 82R and the lower arm 84R substantially extend in the lateral direction. The upper arms 80R and 82R are pivotally supported on the vehicle body 24 at the inner ends via the joints 80Ri and 82Ri, respectively, and are pivotally connected to the wheel carrier 16R via joints 80Ro and 82Ro at the outer ends. The lower arm 84R is pivotally supported on the vehicle body 24 at the inner end via a joint 84Ri and pivotally attached to the wheel carrier 16R at the outer end via a joint 84Ro.

As shown in FIG. 6, the joint 80Ro is positioned above and in front of the rotation axis 15R of the front wheel 12R, and the joint 82Ro is positioned above and rearward of the rotation axis 15R of the front wheel 12R. The joint 84Ro is located below and slightly forward of the rotation axis 15R. As shown in FIG. 5, the joint 82Ro is located above the joint 80Ro, and the joint 84Ro is located outside the vehicle than the joints 80Ro and 82Ro.

The joints 80Ri, 82Ri and 84Ri include rubber bushing devices 80Rib, 82Rib and 84Rib, respectively. The rubber bushing devices 80Rib, 82Rib and 84Rib have axes extending in the front-rear direction, and both ends of the rubber bushing devices are supported by brackets (not shown) provided on the vehicle body 24. Likewise, joints 80Ro, 82Ro and 84Ro include rubber bushing devices 80Rob, 82Rob and 84Rob, respectively. The rubber bushing devices 80Rob, 82Rob and 84Rob have axes extending in the front-rear direction, and both ends of the rubber bushing devices 80Rob, 82Rob and 84Rob are supported by brackets (not shown) provided on the wheel carrier 16R.

The rubber bushing devices 80Rob, 82Rob and 84Rob cooperate with each other to determine a principal elastic axis 88R extending substantially in the vertical direction. The principal elastic axis 88R extends vertically through the rotation axis 15R of the front wheel 12R as viewed in the lateral direction, extends obliquely so that an upper portion is located inside the vehicle with respect to the wheel 12R as viewed in the front-rear direction, and passes through a center 72C of a grounding area 72 where the tire 64 is in contact with a road surface 70.

### [Fourth Embodiment]

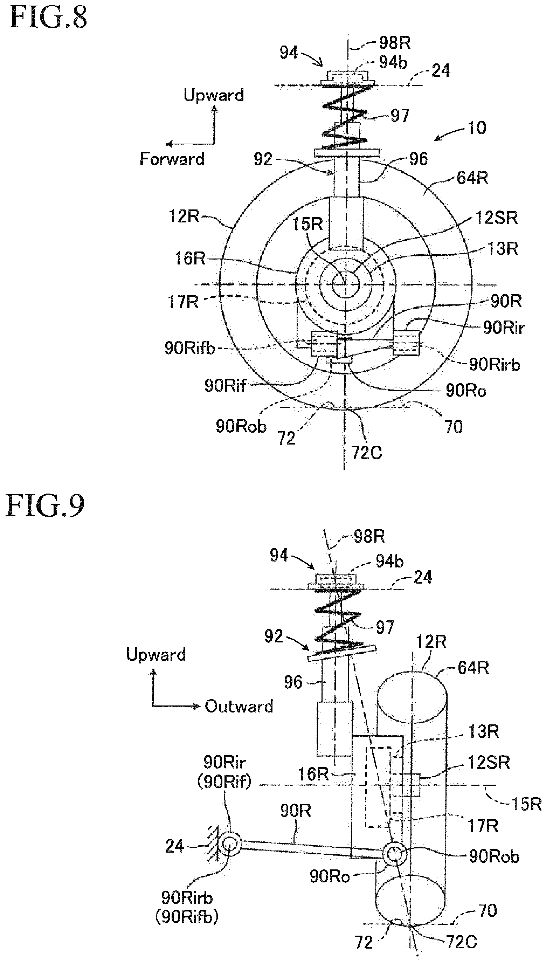

FIGS. 8 and 9 are side and rear views, respectively of a main part of a right front wheel suspension device according to the fourth embodiment of the present invention.

In the fourth embodiment, the suspension device 10 is configured as a MacPherson strut type suspension device including an L-shaped control arm 90R and a McPherson strut 92. The control arm 90R extends substantially in the lateral direction, is pivotally supported on the vehicle body 24 at the inner end via joints 90Rif and 90Rir, and is pivotally attached to the wheel carrier 16R at the outer end via a joint 90Ro.

As shown in FIG. 8, the joint 90Rif is located below and slightly forward of the rotation axis 15R of the front wheel 12R and the joint 90Rir is located below and rearward of the rotation axis 15R. The joint 90Ro is positioned below the rotation axis 15R of the front wheel 12R. Joints 90Rif, 90Rir and 90Ro include rubber bushing devices 90Rifb, 90Rirb and 90Rob, respectively. The rubber bushing devices 90Rifb and 90Rirb have axes extending in the front-rear direction, and both ends thereof are supported by brackets (not shown) provided on the vehicle body 24. The rubber bushing device 90Rob has an axis extending in the front-rear direction, and both ends thereof are supported by a bracket (not shown) provided on the wheel carrier 16R.

The MacPherson strut 92 includes a shock absorber 96 connected at the upper end to the vehicle body 24 by an upper support 94 and integrally connected to the wheel carrier 16R at the lower end, and a suspension spring 97. The suspension spring 97 is elastically mounted between the upper seat supported by the upper support 94 and a lower seat supported by the shock absorber 96. The upper support 94 includes a rubber bush device 94b of well-known construction. Although the MacPherson strut 92 extends vertically in the embodiment, it may be inclined in the longitudinal direction and/or lateral direction.

The rubber bushing devices 90Rob and 94b cooperate with each other to determine a principal elastic axis 98R extending substantially in the vertical direction. The principal elastic axis 98R extends vertically through the rotation axis 15R of the front wheel 12R as viewed in the lateral direction, extends obliquely so that an upper portion is located inside the vehicle with respect to the front wheel 12R as viewed in the front-rear direction, and passes through a center 72C of a grounding area 72 where the tire 64 is in contact with a road surface 70.

### [Operational Effects Common to All Embodiments]

As understood from the above explanations, according to the above-described embodiments, the principal elastic axis 68R and the like are determined by the elastic bushing device 56f and the like interposed between the end portion of the suspension arm 22R and the wheel carrier 16R or the like. The principal elastic axis passes through the center 72C of the grounding area 72 where the tire 64R of the front wheel 12R and the like is in contact with a road surface 70.

A longitudinal force acting on the front wheel at the time of acceleration and deceleration of the vehicle 11 and at the time of disturbance being input from a road surface and a lateral force acting on the front wheel at the time of turning of the vehicle act on the front wheel in the grounding area 72. Therefore, as compared with a configuration in which a principal elastic axis does not pass through a grounding area of the front wheel, since a distance between a position where a longitudinal force and a lateral force act and the principal elastic axis is small, a torque abut the principal elastic axis which occurs when a longitudinal force and/or a lateral force act on the front wheel is small, and a change in steered angle of the front wheel is also small. Accordingly, as compared with a case where a principal elastic axis does not pass through a grounding area of a driving wheel, a running stability of the vehicle at the time of acceleration and deceleration of the vehicle and at the time of turning can be improved.

In particular, according to the above-described embodiments, a principal elastic axis passes through a center 72C of a grounding area 72 of each front wheel. However, if a principal elastic axis does not pass through the center 72C but passes through the grounding area 72, the distance between a position where a longitudinal force and/or a lateral force acts and the principal elastic axis is small as compared with a case where the principal elastic axis does not pass through the grounding area, so that a change in steered angle of the front wheel can be reduced. Therefore, it is sufficient that a principal elastic axis passes through a grounding area, and the principal elastic axis does not have to pass through the center of the grounding area.

Further, according to the above-described embodiments, a principal elastic axis 68R and the like extend vertically through the rotation axis 15R of the front wheel 12R and the like as viewed in the lateral direction. Therefore, as compared with a case where a principal elastic axis does not pass through the rotation axis of the front wheel as seen in the lateral direction of the vehicle, a torque about the principal elastic axis generated when a lateral force acts on the front wheel is small, and a change in steered angle can be reduced, so that a running stability of the vehicle at the time of turning of the vehicle can be further improved.

In particular, according to the above-described embodiments, the principal elastic axis extends vertically through the rotation axis of the front wheel as seen in the lateral direction. However, if the principal elastic axis does not pass through the rotation axis of the front wheel as seen in the lateral direction, but passes through an area of the axle of the front wheel as seen in the lateral direction, a distance between the rotational axis and the principal elastic axis is smaller than in the case of a configuration in which a principal elastic axis does not pass through an area of the axle, it is possible to reduce a change in steered angle of the front wheel when a lateral force is applied. Therefore, the principal elastic axis only needs to pass through the area of the axle of the front wheel as seen in the lateral direction, and the principal elastic axis does not need to pass through the rotational axis of the front wheel. Furthermore, if the principal elastic axis passes in the vicinity of the axle of the front wheel as seen in the lateral direction, a distance between the rotational axis and the elastic principal axis is small as compared with a configuration in which the principal elastic axis passes through a position far from the axle. Therefore, as long as a distance between the principal elastic axis and the rotation axis of the front wheel is three times, preferably twice or less a radius of the axle as seen in the lateral direction, the principal elastic axis may not pass through the area of the axle of the front wheel.

Further, according to the above-described embodiments, the non-steered driving wheels suspended from the vehicle body 24 by the suspension device 10 are the front wheels 12L and 12R of the automatic tilting vehicle 11 that is tilted inward in turn when turning by the vehicle tilting device 18. Therefore, it is possible to reduce a change in steered angle of the front wheels during acceleration/deceleration and turning of the automatic tilting vehicle 11, which enables to improve a running stability of the vehicle at the time of acceleration/deceleration of the automatic tilting vehicle, a disturbance being input from a road surface and turning.

### [Operational Effects Inherent to Each Embodiment]

In particular, according to the first embodiment, the suspension arms 22L and 22R are leading arms, but they may be trailing arms. Therefore, in the automatic tilting vehicle 11 in which the suspension devices 10 are leading arm type or trailing arm type suspension devices for non-steered driving front wheels, it is possible to reduce a change in steered angle of the driving wheels which occurs when a longitudinal force and/or a lateral force act on the front wheels which are the non-steered driving wheels.

According to the second and third embodiments, the suspension device 10 has three suspension arms extending in the lateral direction of the vehicle, and the three suspension arms are connected to the wheel carrier 16R via the rubber bushing device 70Rob or the like. Therefore, in the automatic tilting vehicle 11 in which suspension devices are double wishbone suspension devices for non-steered driving front wheels, it is possible to reduce a change in steered angle of the front wheels which occurs when a longitudinal force and/or a lateral force act on the front wheels which are the non-steered driving wheels.

Further, according to the fourth embodiment, in the automatic tilting vehicle 11 in which a suspension device is the McPherson strut type suspension device for non-steered driving wheel, it is possible to reduce a change in steered angle of the front wheels which occurs when a longitudinal force and/or a lateral force act on the front wheels which are the non-steered driving wheels.

Although the present invention has been described in detail with reference to specific embodiments, it will be apparent to those skilled in the art that the present invention is not limited to the above-described embodiments, and various other embodiments are possible within the scope of the present invention.

For example, in the embodiments described above, the elastic bushing device is a rubber bushing device. However, the elastic bush device may be a bush device having an elastic vibration isolator function, and the material constituting the bush may be a material other than rubber such as resin.

In the above-described embodiments, the inner end of the respective suspension arm is pivotally supported by the vehicle body 24 via a rubber bushing device. However, the inner end of at least one suspension arm may be pivotally supported on the vehicle body 24 via another joint such as a ball joint.

Further, in the above-described second to fourth embodiments, the suspension arm substantially extends laterally and horizontally of the vehicle, but at least one suspension arm may extend obliquely with respect to the lateral or horizontal direction of the vehicle.

In the above-described embodiments, the suspension device 10 is applied to the automatic tilting vehicle 11 having the vehicle tilting device 18, and the vehicle tilting device 18 swings the swing member 36 so that the connecting rods 40L and 40R move up and down in opposite phases to tilt the vehicle. However, the suspension device 10 may be applied to an automatic tilting vehicle having a vehicle tilting device of an arbitrary structure, and furthermore, it may be configured as a suspension device for non-steered driving wheels of a vehicle other than the automatic tilting vehicle as long as an in-wheel motor is incorporated in a wheel.

## Claims

1. A suspension device (10) for a non-steered driving wheel (12L, 12R) which is rotationally driven by an in-wheel motor (17L, 17R) incorporated in a wheel carrier (16L, 16R), the suspension device comprising at least one suspension arm (22L, 22R) pivotally supported at one end on a vehicle body (24) of a vehicle (11) and connected to the wheel carrier on the other end side, **characterized in that**
the at least one suspension arm (22L, 22R) is connected to the wheel carrier (16L, 16R) via at least two elastic bushing devices (56f, 56r and 56u), and a principal elastic axis (68R) which is determined by the at least two elastic bushing devices and extends vertically passes through a grounding area (72) of the driving wheel.

2. The suspension device (10) for a non-steered driving wheel according to claim 1, **characterized in that** the non-steered driving wheel (12L, 12R) has an axle (13L, 13R) rotatably supported by the wheel carrier (16L, 16R) via a bearing (12SL, 12SR), and the principal elastic axis (68R) passes through an area of the axle as seen in a lateral direction of the vehicle.

3. The suspension device (10) for a non-steered driving wheel according to claim 1 or 2, **characterized in that** the at least one suspension arm is one suspension arm (22L, 22R) extending in a longitudinal direction of the vehicle, and the one suspension arm is connected to the wheel carrier (16L, 16R) via elastic bushing devices (56f, 56r and 56u) at a plurality of positions including two positions spaced apart in the longitudinal direction of the vehicle and one position vertically spaced from the two positions.

4. The suspension device (10) for a non-steered driving wheel according to claim 1 or 2, **characterized in that** the at least one suspension arm includes a plurality of suspension arms (70R, 72R and 74R or 80R, 82R and 84R) extending in a lateral direction of the vehicle, and the plurality of suspension arms are connected to the wheel carrier (16L, 16R) via the elastic bushing devices (70Rib, 72Rib and 74Rib or 80Rib, 82Rib and 84Rib).

5. The suspension device (10) for a non-steered driving wheel according to claim 1 or 2, **characterized in that** the suspension device includes a MacPherson strut (92) integrally connected to the wheel carrier (16R) at the lower end, and one (94b) of the at least two elastic bush devices that determines the principal elastic axis (98R) is interposed between an upper end of the MacPherson strut and the vehicle body (24).

6. The suspension device (10) for a non-steered driving wheel according to any one of claims 1 to 5, **characterized in that** the vehicle (11) includes a pair of the non-steered driving wheels (12L, 12R) spaced laterally and a vehicle tilting device (18) configured to tilt the vehicle to a turning inner side when the vehicle turns, and the vehicle tilting device includes a swing member (36) that swings about a swing axis (34) extending in the front-rear direction, an actuator (38) that swings the swing member about the swing axis, and a pair of connecting rods (40L, 40R) pivotally connected to the swing member at upper end pivot points and pivotally connected to the corresponding wheel carriers (16L, 16R) at lower end pivot points on both lateral sides with respect to the swing axis.
